# EUROPEAN PATENT SPECIFICATION

(11) **EP 4 429 185 B1**
(45) Date of publication and mention of the grant of the patent: **25.02.2026**
(21) Application number: 22897869.8
(22) Date of filing: 24.11.2022
(51) Int. Cl.: H04L 45/00, H04L 45/02

(54) **TRAFFIC DIVERSION METHODS, DEVICES AND SYSTEM**
VERFAHRENS, VORRICHTUNGEN UND SYSTEM ZUR VERKEHRSUMLEITUNG
PROCÉDÉS, DISPOSITIFS ET SYSTÈME DE DÉTOURNEMENT DE TRAFIC

(30) Priority: 25.11.2021 CN 202111413611; 28.02.2022 CN 202210188613
(43) Date of publication of application: 11.09.2024
(73) Proprietor: Huawei Technologies Co., Ltd., Shenzhen, Guangdong 518129 (CN)
(72) Inventor: DONG, Jie, Shenzhen, Guangdong 518129 (CN); WANG, Haibo, Shenzhen, Guangdong 518129 (CN); LI, Zhenbin, Shenzhen, Guangdong 518129 (CN)
(74) Representative: Körber, Martin Hans
(86) International application number: PCT/CN2022/133915
(87) International publication number: WO 2023/093786

(56) References cited:
- CN-A- 110 535 766
- CN-A- 110 912 796
- CN-A- 112 511 329
- CN-A- 112 511 329
- CN-A- 112 532 445
- CN-A- 113 411 258
- JP-A- 2020 053 719
- US-A1- 2023 261 995
- PENG Y LIU ZTE CORPORATION S: "BGP Tunnel Encapsulation Attribute Extensions for Network Slicing draft-peng-idr-bgp-tea-extensions-network-slicing-00; draft-peng-idr-bgp-tea-extensions-network-slicing-00.txt", 10 May 2021 (2021-05-10), pages 1 - 17, XP015145741, Retrieved from the Internet <URL:https://tools.ietf.org/html/draft-peng-idr-bgp-tea-extensions-network-slicing-00> [retrieved on 20210510]

## Description

### TECHNICAL FIELD

This application relates to the field of communication technologies, and in particular, to a traffic steering methods, devices, and a system.

### BACKGROUND

The internet protocol version 4 (Internet Protocol version 4, IPv4) is a widely deployed internet protocol currently. An IPv4 technology is simple, easy to implement, and has good interoperability. However, an important lesson in development of the IPv4 technology is scalability. When the IPv4 technology is designed, it is not expected that so many devices access an internet protocol (Internet Protocol, IP) network. In this case, development of an internet protocol version 6 (Internet Protocol version 6, IPv6) technology is triggered. IPv6 replaces IPv4 to mainly resolve a problem of IPv4 address exhaustion, and IPv6 also has many improvements over IPv4 in another aspect. However, an important lesson in the development of the IPv6 technology is compatibility. At that time, ideas are simple. Since space of a 32-bit address is insufficient, the 32-bit address is extended to 128 bits. However, a 128-bit IPv6 address is not compatible with a 32-bit IPv4 address. As a result, an entire network needs to be upgraded to support IPv6, causing a difficulty in application deployment. From this perspective, segment routing over internet protocol version 6 (Segment Routing over Internet Protocol version 6, SRv6) is compatible with IPv6 route-based forwarding, and an advantage of multiprotocol label switching (Multiprotocol Label Switching, MPLS) forwarding is considered, so that smooth evolution of SRv6 from an IPv6 network is ensured.

Network slicing is an on-demand networking mode. Specifically, a network slice is a virtual network separated from a physical network. A plurality of network slices may be separated from a same physical network. Logical isolation may be implemented between network slices, to adapt to various types of applications.

A flow specification (Flow Specification, Flowspec) is a mechanism for delivering and transferring a flow matching rule and a flow forwarding policy to a network device, and a specified traffic action may be performed on a data packet that matches the matching rule. Typically, Flowspec information may be delivered and transferred by using a control message that is based on a border gateway protocol (Border Gateway Protocol, BGP). This implementation is also referred to as a BGP Flowspec. By using the BGP Flowspec, a matching rule and a traffic action can be configured and managed in a centralized manner, and the matching rule and the traffic action can be quickly applied to the network device.

However, in a communication network scenario, traffic steering of a data packet based on the network slice cannot be implemented based on an existing Flowspec implementation.

US 2023/0261995 A1 discloses an information notification method, for steering a data packet.

S. PENG and Y. LIU, ZTE CORPORATION S: "BGP Tunnel Encapsulation Attribute Extensions for Network Slicing", pages 1-17, discloses extension to BGP Tunnel Encapsulation attribute to provide network slicing information needed to create tunnels and their encapsulation headers.

### SUMMARY

The invention is defined in the independent claims. Additional features of the invention are provided in the dependent claims.

### BRIEF DESCRIPTION OF DRAWINGS

FIG. 1 is a schematic diagram of a structure of a communication network according to an embodiment of this application;
FIG. 2 is a flowchart of a traffic steering method according to the claimed invention.
FIG. 3 is a schematic diagram of a structure of a first network device according to an embodiment of this application;
FIG. 4 is a schematic diagram of a hardware structure of a first network device according to an embodiment of this application;
FIG. 5 is a schematic diagram of a hardware structure of another first network device according to an embodiment of this application;
FIG. 6 is a schematic diagram of a structure of a second network device according to an embodiment of this application;
FIG. 7 is a schematic diagram of a hardware structure of a second network device according to an embodiment of this application; and
FIG. 8 is a schematic diagram of a hardware structure of another second network device according to an embodiment of this application.

### DESCRIPTION OF EMBODIMENTS

The following describes the technical solutions of this application in detail by using specific embodiments.

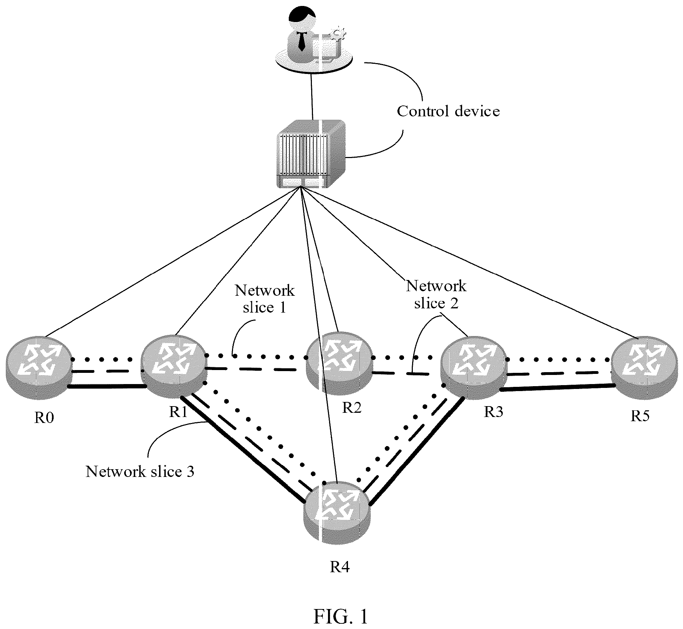

FIG. 1 is a schematic diagram of a structure of a communication network according to an embodiment of this application. The communication network includes a control device. The communication network further includes a plurality of network devices, such as R0, R1, R2, R3, R4, and R5. The communication network may be, for example, an IP network. As shown in FIG. 1, the control device communicates with R0, R1, R2, R3, R4, and R5. R0, R1, R2, and R3 communicate with R5 sequentially, and R4 communicates with R1 and R3 separately. In addition, the communication network shown in FIG. 1 may include a plurality of network slices, for example, a network slice 1, a network slice 2, and a network slice 3. In the network slice 1 (as shown by a "dotted line (dotted line)" in FIG. 1), R0, R1, R2, and R3 communicate with R5 sequentially, and R4 communicates with R1 and R3 separately. An ingress node of the network slice 1 is R0, and an egress node of the network slice 1 is R5. In the network slice 2 (as shown by a "dashed line (dashed line)" in FIG. 1), R0, R1, R2, and R3 communicate with R5 sequentially, and R4 communicates with R1 and R3 separately. An ingress node of the network slice 2 is R0, and an egress node of the network slice 2 is R5. In the network slice 3 (as shown by a "thick solid line (thick solid line)" in FIG. 1), R0, R1, R4, and R3 communicate with R5 sequentially. An ingress node of the network slice 3 is R0, and an egress node of the network slice 3 is R5. It should be noted that the foregoing described paths of the network slices are examples. In an actual service scenario, after an ingress node (a source node) and an egress node (a destination node) of a network slice are determined, a forwarding node between the ingress node and the egress node may be determined based on a resource reservation policy. For example, the control device determines a topology or a path of the network slice based on the resource reservation policy, and triggers a network device on the topology or the path to reserve a resource. For another example, the control device delivers resource information of the network slice (for example, traffic information of a service that needs to be carried by using the network slice) to a network device in the network. The network device in the network adaptively allocates a resource based on the resource information and a slice identifier. In this way, hop-by-hop network devices all independently allocate the resource of the network slice, and a forwarding path in the network slice is also determined accordingly.

FIG. 1 shows that the control device communicates with R0, R1, R2, R3, R4, and R5, to transfer a control message. The control device may be a controller, a network management device, a server, or a route reflector (route reflector, RR). In addition, in an actual service scenario, a control device that is an independent hardware entity may not be deployed, but a function of the control device is implemented in a network device in the communication network. For example, the function of the control device is implemented on R1. For another example, the function of the control device is implemented on a network device other than the network slice 1, the network slice 2, and the network slice 3.

In FIG. 1, each of R0, R1, R2, R3, R4, and R5 may be a router or a switch, or may be a device having a forwarding function, such as a server or a terminal device. The switch may be a layer 3 switch. R0, R1, R2, R3, R4, and R5 may be provider edge (provider edge, PE) devices in the network. As shown in FIG. 1, R0 is the ingress node of the network slice, and R0 may also be referred to as a source node or an edge node of the network slice. R5 is the egress node of the network slice, and R5 may also be referred to as a destination node or an edge node of the network slice. R0 may be connected to at least one first customer edge (customer edge, CE) device, and the first CE device is configured to transmit a data packet to R0. R5 may be connected to at least one second CE device, and the second CE device receives a data packet transmitted by R5. Each of the first CE device and the second CE device may be connected to user equipment. The user equipment may be referred to as a terminal device, a mobile station (Mobile Station, MS), a mobile terminal (Mobile Terminal, MT), a terminal, or the like. The user equipment is a device that provides voice and/or data connectivity for a user, or a chip disposed in the device. For example, the user equipment may be a handheld device, a vehicle-mounted device, or the like that has a wireless connection function. The user equipment may be a mobile phone, a desktop computer, a tablet computer, a notebook computer, a palmtop computer, a mobile internet device (Mobile Internet Device, MID), a wearable device, a virtual reality (Virtual Reality, VR) device, an augmented reality (Augmented Reality, AR) device, a wireless terminal or a wired terminal in industrial control (Industrial Control), a wireless terminal in self driving (Self Driving), a wireless terminal in a remote surgery (Remote Surgery), a wireless terminal in a smart grid (Smart Grid), a wireless terminal in transportation safety (Transportation Safety), a wireless terminal in a smart city (Smart City), a wireless terminal in a smart home (Smart Home), a home gateway device supporting 5G access (5G-residential gateway, 5G-RG), or the like. In addition, the user equipment may alternatively be a computer or a server in an enterprise network. In a possible implementation, communication links between R0, R1, R2, R3, R4, and R5 are physical communication links. The physical communication link may be a cable, an optical fiber, or a wireless link. Ports that connect R0, R1, R2, R3, R4, and R5 to the communication links may be physical ports.

As shown in FIG. 1, the control device may send a control message to R0, R1, R2, R3, R4, and R5. The control message may include flow specification (Flow Specification, Flowspec) information. The control message includes a match item and an action item. After receiving the control message, R0, R1, R2, R3, R4, and R5 obtain the match item and the action item. Then, R0, R1, R2, R3, R4, and R5 determine whether the match item is met, and when the match item is met, execute an action indicated by the action item. In a possible implementation, the control message may be a border gateway protocol (Border Gateway Protocol, BGP) update (update) message. Therefore, an implementation of delivering the Flowspec information based on a BGP may be referred to as a BGP Flowspec. In addition, the BGP Flowspec may be used for policy matching during IPv4 data packet forwarding, or may be used for policy matching during IPv6 data packet forwarding. For a related implementation of the BGP Flowspec, refer to related descriptions in the internet engineering task force (Internet Engineering Task Force, IETF) request for comments (Request For Comments, RFC) 8955 and RFC 8956.

However, in an existing Flowspec implementation, an operation of steering a data packet to a network slice is not supported. In other words, after receiving the data packet, the network device cannot steer the data packet to the network slice when a match item is matched.

To resolve the foregoing problem, this application provides a corresponding solution. As shown in FIG. 1, the control device may send the control message to the ingress node R0 of the network slice. The control message includes the traffic steering match item and the traffic steering action item. The control message indicates R0 to steer, based on the traffic steering action item, a data packet that matches the traffic steering match item to the network slice, for example, introduce the data packet to the network slice.

After receiving the control message, R0 determines a forwarding entry based on the control message. The forwarding entry includes the traffic steering match item and the traffic steering action item. R0 may receive the data packet. For example, R0 receives a data packet from a CE device. Then, R0 determines, based on the traffic steering match item, that the data packet matches the traffic steering match item. In addition, R0 steers the data packet to the network slice based on the traffic steering action item. For example, R0 determines a forwarding action based on the traffic steering action item. The forwarding action includes an outbound interface and/or a next hop. Specifically, the traffic steering action item may carry slice information, to steer the data packet to the corresponding network slice. In a possible implementation, the control message is the BGP update message. The BGP update message includes BGP routing information. The BGP routing information carries the traffic steering match item and the traffic steering action item. Specifically, the BGP routing information is BGP flowspec information. The BGP flowspec information carries the traffic steering match item and the traffic steering action item. In another possible implementation, the control message is a network configuration protocol (network configuration protocol, NETCONF) message. The NETCONF message includes event-condition-action (event-condition-action, ECA) information. An action in the ECA information carries the traffic steering action item. A condition in the ECA information carries the traffic steering match item. Therefore, based on the foregoing implementations, a matching rule and a forwarding policy are delivered based on the control message, and the data packet that matches the traffic steering match item is steered (steer) to the corresponding network slice based on the traffic steering action item.

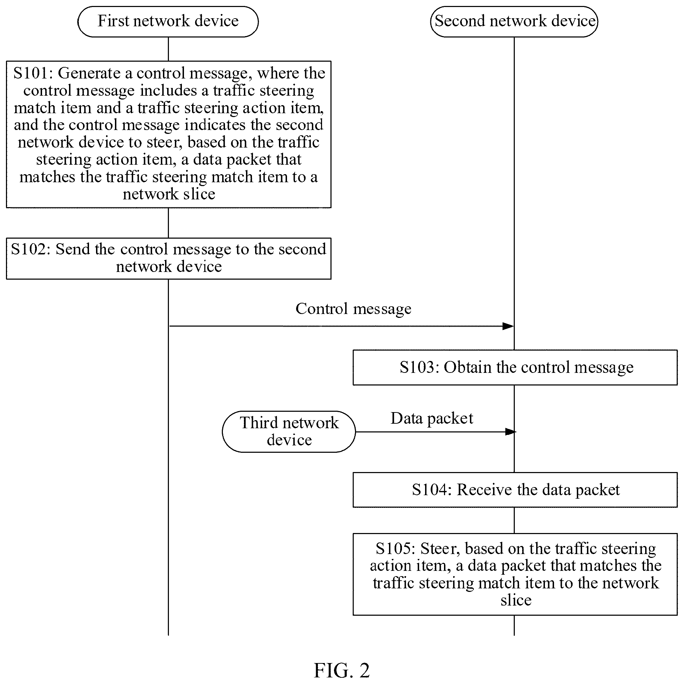

FIG. 2 is a flowchart of a traffic steering method according to the claimed invention. The method shown in FIG. 2 may be applied to the structure of the network shown in FIG. 1. A first network device in FIG. 2 may be equivalent to the control device in FIG. 1, and a second network device in FIG. 2 may be equivalent to R0 in FIG. 1. In this implementation of this application, interaction between the first network device and the second network device in FIG. 2 is described. It should be understood that another network device may exist on a communication link between the first network device and the second network device. Specifically, the method includes the following steps.

S101: The first network device generates a control message. The control message includes a traffic steering match item and a traffic steering action item. The control message indicates the second network device to steer, based on the traffic steering action item, a data packet that matches the traffic steering match item to a network slice.

The control message includes the traffic steering match item and the traffic steering action item. The traffic steering match item is a matching policy or a matching rule determined by the first network device. Therefore, the traffic steering match item may include at least one piece of matching information. For example, at least one of the following information may be used as the matching information in the traffic steering match item: a source IP address, a destination IP address, a source port number, a destination port number, a protocol number, a flow label, and a priority. The source IP address refers to a source IP address included in a packet header of a data packet, for example, an IP address of a sending device of the data packet. The destination IP address refers to a destination IP address included in the packet header of the data packet, for example, an IP address of a receiving device of the data packet. The source port number refers to a source port number included in the packet header of the data packet, for example, an identifier of a port that sends the data packet. The destination port number refers to a destination port number included in the packet header of the data packet, for example, an identifier of a port that receives the data packet. The protocol number refers to a protocol number included in the packet header of the data packet, for example, an identifier of a protocol followed by the data packet. The flow label refers to a flow label included in the packet header of the data packet. For example, the flow label indicates a data flow of the data packet. The priority is a priority included in the packet header of the data packet, for example, a service priority. Therefore, after receiving a control packet, the second network device may obtain, from the transmitted data packet, information of a same type as that of the matching information. For example, the second network device may obtain, from a packet header of the transmitted data packet, information of the same type as that of the matching information, and compare the corresponding information in the packet header with the matching information. For example, matching information in a traffic steering match item 1 includes <destination IP address: 100.100.100.1/24, source IP address: 99.99.99.1/24>. After receiving a data packet 1, the second network device obtains a destination IP address and a source IP address from a packet header of the data packet 1. If the destination IP address of the data packet 1 is 100.100.100.1/24, and the source IP address of the data packet 1 is 99.99.99.1/24, the second network device may determine that the data packet 1 matches the traffic steering match item 1.

The traffic steering action item is a processing action that is determined by the first network device and that is for the data packet. In other words, when the second network device determines that the data packet matches the traffic steering match item, the traffic steering action item is valid. Correspondingly, the second network device processes the data packet based on an action indicated by the traffic steering action item. The traffic steering action item includes slice information, and the slice information indicates the network slice. In this way, when determining that the data packet matches the traffic steering match item, the second network device steers the data packet to the network slice based on the slice information in the traffic steering action item, so that the network slice transmits the data packet. In a possible implementation, the slice information includes a slice identifier. For example, a value of the slice identifier is 100, indicating the network slice 1 in FIG. 1. According to the claimed invention, the slice information includes a segment list (segment list), and the segment list includes a plurality of segment identifiers (segment identifiers, SIDs). Therefore, the segment list is referred to as a segment identifier list.
The segment list is a segment identifier list associated with a slice. For example, as shown in FIG. 1, an SID of R0 is A3, an SID of R1 is B3, an SID of R4 is C3, an SID of R3 is D3, and an SID of R5 is E3. In this case, the segment list is <A3, B3, C3, D3, E3>, indicating the network slice 3 in FIG. 1. In still another possible implementation, the slice information includes both a slice identifier and a segment list. For example, a value of the slice identifier is 200, and the segment list is <A, B, C, D, E, F>, indicating the network slice 2 in FIG. 1. The value 200 of the slice identifier indicates the network slice 2. The segment list <A, B, C, D, E, F> indicates an explicit path in the network slice 2. It should be noted that when the slice information includes the segment list but does not include the slice identifier, the SIDs in the segment list are valid only in a network slice that needs to be indicated, and indicate the corresponding network slices. For example, the foregoing segment list is <A3, B3, C3, D3, E3>.

In a possible implementation, the control message may be a BGP update message. The BGP update message includes BGP routing information, and the BGP routing information carries the traffic steering match item and the traffic steering action item. Specifically, the BGP routing information is BGP flowspec information. Therefore, the traffic steering match item and the traffic steering action item may be implemented based on a Flowspec technology. In other words, the traffic steering match item and the traffic steering action item may be considered to be implemented based on a BGP Flowspec technology. Specifically, the BGP update message includes the BGP flowspec information, and the BGP flowspec information includes the traffic steering match item and the traffic steering action item.

For example, the BGP flowspec information includes network layer reachability information (network layer reachability information, NLRI). The NLRI carries the traffic steering match item. Specifically, the NLRI includes a multiprotocol reachable NLRI (Multiprotocol Reachable NLRI, MP_REACH_NLRI) attribute, and the MP_REACH_NLRI attribute includes an address family identifier (address family identifier, AFI) field and an NLRI field. A value of the AFI field indicates that information carried in the NLRI is the BGP flowspec information. The NLRI field may carry the traffic steering match item. In a similar implementation, the NLRI may further carry the traffic steering action item. Specifically, the NLRI field may carry the traffic steering action item.

For example, the BGP flowspec information further includes a route attribute, and the route attribute may carry the traffic steering action item. For example, the traffic steering action item may serve as an extended community (Extended Community) attribute or a wide community (Wide Community) attribute of a new BGP, and is carried in an extended community attribute field or a wide community attribute field of the BGP update message. The extended community attribute and the wide community attribute belong to the route attribute. To be specific, the extended community attribute field or the wide community attribute field that carries the traffic steering action item may be one piece of BGP route attribute information.

Optionally, when the extended community attribute carries the traffic steering action item, the traffic steering action item may be implemented based on the following format:

| |
|---|
| Type (Type) |
| Subtype (Subtype) |
| Flag (Flags) |
| Traffic steering action type (Traffic steering action type) |
| Slice information. |

In the foregoing information format implementation, a length of the type (Type) field and a length of the subtype (Subtype) field are 1 byte each. The type field and the subtype field indicate a type of the foregoing extended community attribute. For example, the type (Type) field and the subtype (Subtype) field indicate that the foregoing extended community attribute is a BGP traffic steering community attribute. A length of the flag (Flags) field is 1 byte. The flag field is used to reserve or indicate another function. A length of the traffic steering action type (Traffic steering action type) field is 1 byte. The traffic steering action type field indicates that a traffic steering action is to steer traffic to the network slice. In other words, the traffic steering action type field indicates that a type of the traffic steering action item is the network slice. A length of the slice information field is 4 bytes. The slice information field indicates the network slice. After obtaining the foregoing information, the network device determines, based on the traffic steering action type field, that the traffic steering action indicated by the traffic steering action item is to steer the data packet to the network slice. Then, the network device may determine, based on the slice information, to steer the data packet to the network slice indicated by the slice information.

Optionally, when the extended community attribute carries the traffic steering action item, the traffic steering action item may alternatively be implemented based on the following format:

| |
|---|
| Type (Type) |
| Subtype (Subtype) |
| Flag (Flags) |
| Slice information. |

In the foregoing information format implementation, a length of the type (Type) field and a length of the subtype (Subtype) field are 1 byte each. The type field and the subtype field indicate a type of the foregoing extended community attribute. For example, the type (Type) field and the subtype (Subtype) field indicate that the foregoing extended community attribute is a BGP traffic steering community attribute for the network slice. A length of the flag (Flags) field is 2 bytes. The flag field is used to reserve or indicates another function. A length of the slice information field is 4 bytes. The slice information field indicates the network slice. After obtaining the foregoing information, the network device may determine, based on the slice information field, to steer the data packet to the network slice indicated by the slice information field.

Optionally, when a new route attribute carries the traffic steering action item, the traffic steering action item may be implemented based on the following format:

| |
|---|
| Attribute flag (Attribute flag) |
| Attribute type (Attribute type) |
| Length (Length) |
| Flag (Flags) |
| Slice information. |

In the foregoing information format implementation, a length of the attribute flag (Attribute flag) field and a length of the attribute type (Attribute type) field are 1 byte each. The attribute flag field and the attribute type field indicate a type of the foregoing route attribute. For example, the attribute flag (Attribute flag) field and the attribute type (Attribute type) field indicate that the foregoing route attribute is a BGP traffic steering route attribute. A length of the length (Length) field is 1 byte or 2 bytes. The length field indicates a length of the foregoing route attribute. A length of the flag (Flags) field is 1 byte. The flag field is used to reserve or indicates another function. A length of the slice information field is 4 bytes. The slice information field indicates the network slice. After obtaining the foregoing information, the network device may determine, based on the slice information field, to steer the data packet to the network slice indicated by the slice information field.

It should be noted that, in an implementation of this application, the BGP routing information may be alternatively implemented by using BGP routing information other than the BGP flowspec information. For example, a new type of BGP routing information is defined to implement the foregoing solution.

In another possible implementation, the traffic steering match item and the traffic steering action item may be implemented based on a NETCONF technology. The control message may be a NETCONF message. The NETCONF message includes ECA information. An event in the ECA information indicates "A data packet is received". An action in the ECA information carries the traffic steering action item. A condition in the ECA information carries the traffic steering match item. After obtaining the foregoing information, the network device determines, based on the event in the ECA information, that matching needs to be performed on the received data packet. Then, the network device determines, based on the condition in the ECA, whether the data packet meets a matching condition. In addition, when the data packet meets the matching condition, the network device steers, based on the action in the ECA, the data packet to a network slice indicated by the slice information.

S102: The first network device sends the control message to the second network device.

S103: The second network device receives the control message sent by the first network device.

Based on the foregoing descriptions, the traffic steering match item and the traffic steering action item may be implemented based on the Flowspec technology. The control message may be the BGP update message. In this case, the BGP update message includes the BGP flowspec information, and the BGP flowspec information includes the traffic steering match item and the traffic steering action item.

Based on the foregoing descriptions, the traffic steering match item and the traffic steering action item may alternatively be implemented based on the NETCONF technology. The control message may be the NETCONF message. In this case, the NETCONF message includes the ECA information, and the ECA information includes the traffic steering match item and the traffic steering action item.

The first network device may be an independently deployed control device (for example, the control device shown in FIG. 1). For example, the control device may be a controller, a network management device, a server, or an RR. Alternatively, the first network device may be a network device (for example, R1 shown in FIG. 1) in the network slice 1, the network slice 2, or the network slice 3. Alternatively, the first network device may be a network device (for example, an ingress node of a network slice 4) other than the network slice 1, the network slice 2, and the network slice 3. In this case, the first network device is a forwarding device having a function of the control device.

S104: The second network device receives the data packet.

For example, as shown in FIG. 1, the second network device is R0. R0 may be connected to at least one CE device. For example, R0 is connected to a first CE device (a third network device in FIG. 1). The first CE device sends the data packet to R0. The data packet may carry at least one of the following information: the source IP address, the destination IP address, the source port number, the destination port number, the protocol number, the flow label, and the priority. R0 receives the data packet sent by the first CE device. R0 is the ingress node of the network slice 1, the network slice 2, or the network slice 3.

S105: The second network device steers, based on the traffic steering action item, the data packet that matches the traffic steering match item to the network slice.

For example, as shown in FIG. 1, after receiving the control message, R0 obtains the traffic steering match item and the traffic steering action item from the control message. In addition, after receiving the data packet, R0 determines whether to steer the data packet to the network slice. According to FIG. 1, R0 is the ingress node of the network slice 1, the network slice 2, and the network slice 3. Therefore, R0 determines whether to steer the data packet to the network slice, and further determines a network slice (the network slice 1, the network slice 2, or the network slice 3) to which the data packet needs to be steered.

Specifically, R0 obtains information in the data packet, and determines whether the information in the data packet matches information in the traffic steering match item. For example, in the data packet, a destination IP address is 100.100.100.1/24 and a source IP address is 99.99.99.1/24, and the information in the traffic steering match item includes <destination IP address: 100.100.100.1/24, source IP address: 99.99.99.1/24>, so that R0 determines that the data packet matches the traffic steering match item. For another example, a priority level carried in the data packet is 1 (where it is assumed that a smaller value of the priority level indicates a higher priority level), and the information in the traffic steering match item includes <Priority level is "greater than" 3>. Therefore, R0 may determine that the priority level carried in the data packet is higher than 3, and R0 determines that the data packet matches the traffic steering match item. Optionally, the traffic steering match item may include one or more matching conditions.

In a case in which R0 determines that the data packet matches the traffic steering match item, the traffic steering action item in the control message takes effect. R0 steers, based on the traffic steering action item, the data packet that matches the traffic steering match item to the network slice. For example, the slice information included in the traffic steering action item is a slice identifier 100 of the network slice 1. R0 steers the data packet to the network slice 1 based on the slice identifier 100 of the network slice 1. For another example, the slice information included in the traffic steering action item is a segment list <A3, B3, C3, D3, E3> of the network slice 3. R0 steers the data packet to the network slice 3 based on the segment list <A3, B3, C3, D3, E3> of the network slice 3. For another example, the slice information included in the traffic steering action item is a slice identifier 200 and an identifier path of a segment list <A, B, C, D, E, F> of the network slice 2. R0 steers the data packet to an explicit path in the network slice 2 based on the slice identifier 200 and the segment list <A, B, C, D, E, F> of the network slice 2.

In a possible implementation, the second network device determines a forwarding entry based on the control message, and the forwarding entry includes the traffic steering match item and the traffic steering action item.

For example, as shown in FIG. 1, after receiving the control message, R0 generates the forwarding entry based on the control message. Therefore, the forwarding entry includes the traffic steering match item and the traffic steering action item. R0 may store the forwarding entry in a forwarding table. In combination of the foregoing descriptions, R0 may steer, based on the forwarding entry and based on the traffic steering action item, the data packet that matches the traffic steering match item to the network slice.

Optionally, the forwarding entry may include a forwarding action, and the forwarding action includes an outbound interface and/or a next hop. The forwarding action is determined and obtained by R0 based on the traffic steering action item. Specifically, R0 may determine a forwarding path based on the traffic steering action item, and then determine the forwarding action based on the forwarding path. In this way, R0 determines that the data packet matches the traffic steering match item based on the traffic steering match item. Then R0 determines an outbound interface and/or a next hop of the data packet based on the traffic steering action item. In addition, R0 forwards the data packet based on the outbound interface and/or the next hop of the data packet. Therefore, R0 steers the data packet to the network slice. For example, after receiving the data packet, R0 determines that the data packet matches the traffic steering match item. Then, R0 determines, based on the forwarding action in the forwarding entry, an outbound interface 1 that is on R0 and that corresponds to the network slice 1. In this case, R0 sends the data packet by using the outbound interface 1, and the data packet enters the network slice 1.

In a possible implementation, the second network device adds the slice information to the data packet.

For example, based on the foregoing descriptions, R0 is an ingress node of a network slice. After receiving the control message, R0 may steer the data packet to the network slice, for example, the network slice 1, based on the traffic steering match item and the traffic steering action item. Therefore, the data packet may be forwarded along a forwarding path of the network slice 1. Before R0 sends the data packet to a next hop of the network slice 1, R0 may add slice information of the network slice 1, for example, the slice identifier 100 of the network slice 1, to the data packet, to obtain an updated data packet to which the slice identifier 100 is added. Then, R0 steers the updated data packet (carrying the slice identifier 100) to the network slice 1 based on the traffic steering action item, in other words, sends the updated data packet to R1 along the forwarding path of the network slice 1. In this way, after obtaining the updated data packet, R1 may forward the data packet based on the slice identifier 100 in the updated data packet. R1 may skip performing traffic steering based on the traffic steering match item and the traffic steering action item. A subsequent node in the network slice 1 may also perform forwarding based on an implementation of R1.

Based on the foregoing implementation, the first network device may send, to the second network device by using the control message, the matching rule and a forwarding policy for steering traffic to the network slice. Correspondingly, after receiving the control message, the second network device steers, to a corresponding network slice based on the traffic steering action item, the data packet that matches the traffic steering match item.

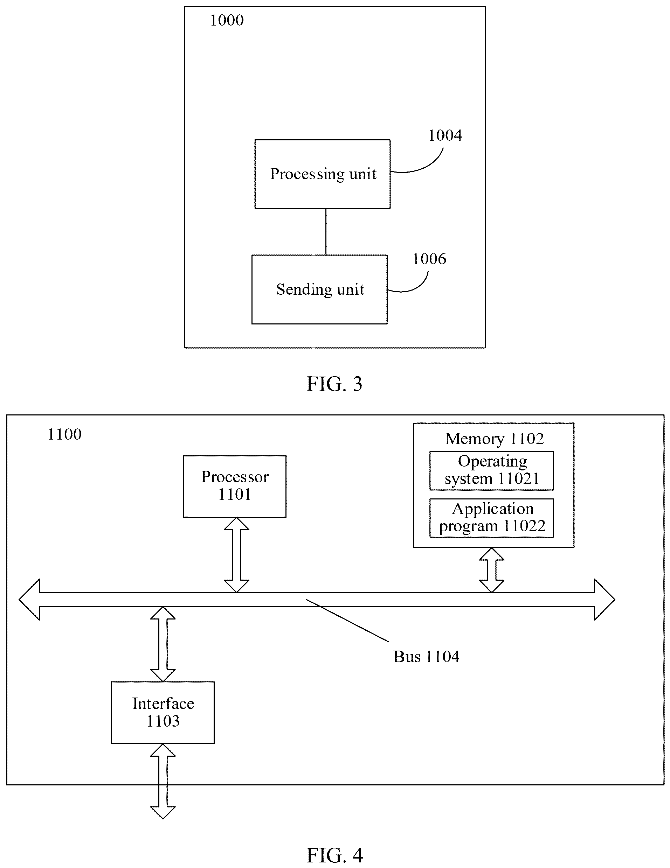

FIG. 3 is a schematic diagram of a structure of a first network device 1000 according to an embodiment of this application. The first network device 1000 shown in FIG. 3 may perform the corresponding steps performed by the first network device in the method in the foregoing embodiments. The first network device 1000 is deployed in a communication network. The communication network further includes a second network device. The first network device 1000 may be a control device. The control device may be a controller, a network management device, a server, or an RR. As shown in FIG. 3, the first network device 1000 includes a processing unit 1004 and a sending unit 1006.

The processing unit 1004 is configured to generate a control message. The control message includes a traffic steering match item and a traffic steering action item.

The sending unit 1006 is configured to send the control message to a second network device. The control message indicates the second network device to steer, based on the traffic steering action item, a data packet that matches the traffic steering match item to a network slice.

Optionally, the traffic steering action item includes slice information. The slice information indicates the network slice.

Optionally, the slice information includes a slice identifier and/or a segment list.

Optionally, the traffic steering match item is used to perform matching on information in the data packet.

Optionally, the control message is a BGP update message. The BGP update message includes BGP routing information. The BGP routing information carries the traffic steering match item and the traffic steering action item.

Optionally, the BGP routing information is BGP flowspec information.

Optionally, the BGP flowspec information includes a route attribute and NLRI. The traffic steering action item is carried in the route attribute. Alternatively, the traffic steering action item is carried in the NLRI.

Optionally, the traffic steering action item further includes a traffic steering action type. The traffic steering action type indicates that the traffic steering action is to steer traffic to the network slice.

Optionally, the traffic steering match item is carried in the NLRI.

Optionally, the control message is a NETCONF message. The NETCONF message includes ECA information. An action in the ECA information carries the traffic steering action item. A condition in the ECA information carries the traffic steering match item.

Optionally, the traffic steering match item includes at least one of the following information: a source internet protocol IP address, a destination IP address, a source port number, a destination port number, a protocol number, a flow label, and a priority.

The first network device 1000 shown in FIG. 3 may perform the corresponding steps performed by the first network device in the method in the foregoing embodiments. The control message sent by the first network device to the second network device carries the traffic steering match item and the traffic steering action item, to indicate the second network device to steer, based on the traffic steering action item, the data packet that matches the traffic steering match item to the network slice.

FIG. 4 is a schematic diagram of a hardware structure of a first network device 1100 according to an embodiment of this application. The first network device 1100 shown in FIG. 4 may perform the corresponding steps performed by the first network device in the method in the foregoing embodiments.

As shown in FIG. 4, the first network device 1100 includes a processor 1101, a memory 1102, an interface 1103, and a bus 1104. The interface 1103 may be implemented in a wireless or wired manner. The processor 1101, the memory 1102, and the interface 1103 are connected by using the bus 1104.

The interface 1103 may specifically include a transmitter and a receiver, and is used by the first network device to receive information from and send information to the second network device in the foregoing embodiments. For example, the interface 1103 is configured to support sending of a control message to the second network device. In an example, the interface 1103 is configured to support a process S102 in FIG. 2. The processor 1101 is configured to perform processing performed by the first network device in the foregoing embodiments. For example, the processor 1101 is configured to perform an action of generating the control message, and/or is used in other processes in the technology described herein. In an example, the processor 1101 is configured to support a process S101 in FIG. 2. The memory 1102 is configured to store a program, code, or instructions, for example, store an action system 11021 and an application program 11022. When executing the program, the code, or the instructions, the processor or a hardware device may complete processing processes related to the first network device in the method embodiments. Optionally, the memory 1102 may include a read-only memory (Read-only Memory, ROM) and a random access memory (Random Access Memory, RAM). The ROM includes a basic input/output system (Basic Input/Output System, BIOS) or an embedded system, and the RAM includes an application program and an action system. When the first network device 1100 needs to run, a bootloader booting system in the BIOS or the embedded system that is firmed in the ROM is used to boot a system to start, and boot the first network device 1100 to enter a normal running state. After entering the normal running state, the first network device 1100 runs the application program and the action system in the RAM, to complete the processing processes related to the first network device in the method embodiments.

It may be understood that FIG. 4 shows merely a simplified design of the first network device 1100. The first network device may include any quantity of interfaces, processors, or memories during actual application.

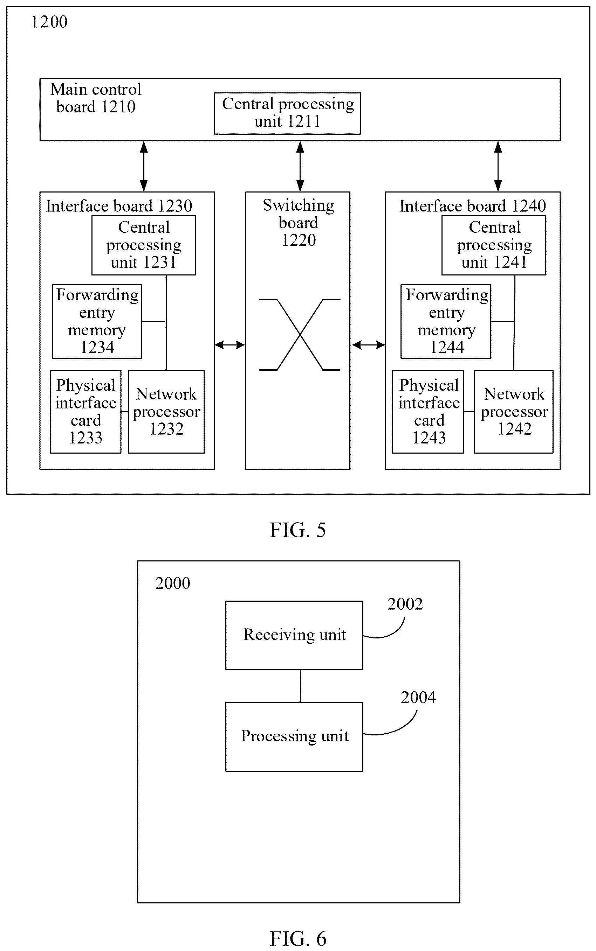

FIG. 5 is a schematic diagram of a hardware structure of another first network device 1200 according to an embodiment of this application. The first network device 1200 shown in FIG. 5 may perform the corresponding steps performed by the first network device in the method in the foregoing embodiments.

As shown in FIG. 5, the first network device 1200 includes a main control board 1210, an interface board 1230, a switching board 1220, and an interface board 1240. The main control board 1210, the interface boards 1230 and 1240, and the switching board 1220 are connected to a system backboard by using a system bus for interworking. The main control board 1210 is configured to complete functions such as system management, device maintenance, and protocol processing. The switching board 1220 is configured to exchange data between the interface boards (where the interface board is also referred to as a line card or a service board). The interface boards 1230 and 1240 are configured to: provide various service interfaces (such as a POS interface, a GE interface, and an ATM interface), and forward a data packet. In a possible implementation, the first network device 2200 is a controller, a network management device, a server, or an RR.

The interface board 1230 may include a central processing unit 1231, a forwarding entry memory 1234, a physical interface card 1233, and a network processor 1232. The central processing unit 1231 is configured to: control and manage the interface board, and communicate with a central processing unit on the main control board. The forwarding entry memory 1234 is configured to store a forwarding entry. The physical interface card 1233 is configured to receive and send traffic. The network memory 1232 is configured to control, based on the forwarding entry, the physical interface card 1233 to receive and send the traffic.

Specifically, the physical interface card 1233 is configured to send the control message to the second network device. Specifically, the central processing unit 1231 is configured to control the network processor 1232 to send the control message to the second network device via the physical interface card 1233.

Optionally, the central processing unit 1211 generates the control message. The central processing unit 1211 sends the control message to the central processing unit 1231. The central processing unit 1231 controls, based on information in the control message, the network processor 1232 to send the control message to the second network device via the physical interface card 1233.

Optionally, the central processing unit 1211 sends control information to the central processing unit 1231. The central processing unit 1231 generates the control message. The central processing unit 1231 controls, based on information in the control message, the network processor 1232 to send the control message to the second network device via the physical interface card 1233.

It should be understood that actions on the interface board 1240 are consistent with the actions on the interface board 1230 in this embodiment of the present invention. For brevity, details are not described. It should be understood that the first network device 1200 in this embodiment may correspond to the functions and/or the various implemented steps in the foregoing method embodiments. Details are not described herein.

In addition, it should be noted that, there may be one or more main control boards. When there are a plurality of main control boards, the main control boards may include an active main control board and a standby main control board. There may be one or more interface boards. A first network device having a stronger data processing capability provides more interface boards. There may also be one or more physical interface cards on the interface board. There may be no switching board or one or more switching boards. When there are a plurality of switching boards, load balancing and redundancy backup may be implemented together. In a centralized forwarding architecture, the first network device may not need the switching board, and the interface board undertakes a service data processing function of an entire system. In a distributed forwarding architecture, the first network device may have at least one switching board. Data between a plurality of interface boards is exchanged by using the switching board, to provide a large-capacity data exchange and processing capability. Therefore, a data access and processing capability of the first network device in the distributed architecture is greater than that of the device in the centralized architecture. A specific architecture to be used depends on a specific networking deployment scenario, and is not limited herein.

In addition, an embodiment of this application provides a computer storage medium, configured to store computer software instructions used by the foregoing first network device. The computer software instructions include a program designed for performing the foregoing method embodiments.

FIG. 6 is a schematic diagram of a structure of a second network device 2000 according to an embodiment of this application. The second network device 2000 shown in FIG. 6 may perform the corresponding steps performed by the second network device in the method in the foregoing embodiments. The second network device is deployed in a communication network, and the communication network further includes a first network device. As shown in FIG. 6, the second network device 2000 includes a receiving unit 2002 and a processing unit 2004.

The receiving unit 2002 is configured to receive a control message sent by the first network device, where the control message includes a traffic steering match item and a traffic steering action item.

The receiving unit 2002 is further configured to receive a data packet.

The processing unit 2004 is configured to steer, based on the traffic steering action item, the data packet that matches the traffic steering match item to a network slice.

Optionally, the traffic steering action item includes slice information. The slice information indicates the network slice.

Optionally, the slice information includes a slice identifier and/or a segment list.

Optionally, the traffic steering match item is used to perform matching on information in the data packet.

Optionally, the control message is a BGP update message. The BGP update message includes BGP routing information. The BGP routing information carries the traffic steering match item and the traffic steering action item.

Optionally, the BGP routing information is that the BGP update message includes BGP flowspec information.

Optionally, the BGP flowspec information includes a route attribute and NLRI. The traffic steering action item is carried in the route attribute. Alternatively, the traffic steering action item is carried in the NLRI.

Optionally, the traffic steering action item further includes a reference action type. The reference action type indicates that a traffic steering action is to steer traffic to the network slice.

Optionally, the traffic steering match item is carried in the NLRI.

Optionally, the control message is a NETCONF message. The NETCONF message includes ECA information. An action in the ECA information carries the traffic steering action item. A condition in the ECA information carries the traffic steering match item.

Optionally, when the processing unit 2004 steers, based on the traffic steering action item, the data packet that matches the traffic steering match item to the network slice, the processing unit 2004 is specifically configured to determine a forwarding entry based on the control message, where the forwarding entry includes the traffic steering match item and the traffic steering action item.

Optionally, when the processing unit 2004 steers, based on the traffic steering action item, the data packet that matches the traffic steering match item to the network slice, the processing unit 2004 is specifically configured to: determine, based on the traffic steering match item, that the data packet matches the traffic steering match item; determine a forwarding action based on the traffic steering action item, where the forwarding action includes an outbound interface and/or a next hop; and forward the data packet based on the forwarding action.

Optionally, before the processing unit 2004 forwards the data packet based on the forwarding action, the processing unit 2004 is further configured to add the slice information to the data packet.

Optionally, the traffic steering match item includes at least one of the following information: a source internet protocol IP address, a destination IP address, a source port number, a destination port number, a protocol number, a flow label, and a priority.

The second network device 2000 shown in FIG. 6 may perform the corresponding steps performed by the second network device in the method in the foregoing embodiments. The second network device receives the control message sent by the first network device. The control message includes the traffic steering match item and the traffic steering action item. Then, the second network device used as a receive end device may steer, based on the traffic steering action item, the data packet that matches the traffic steering match item to the network slice.

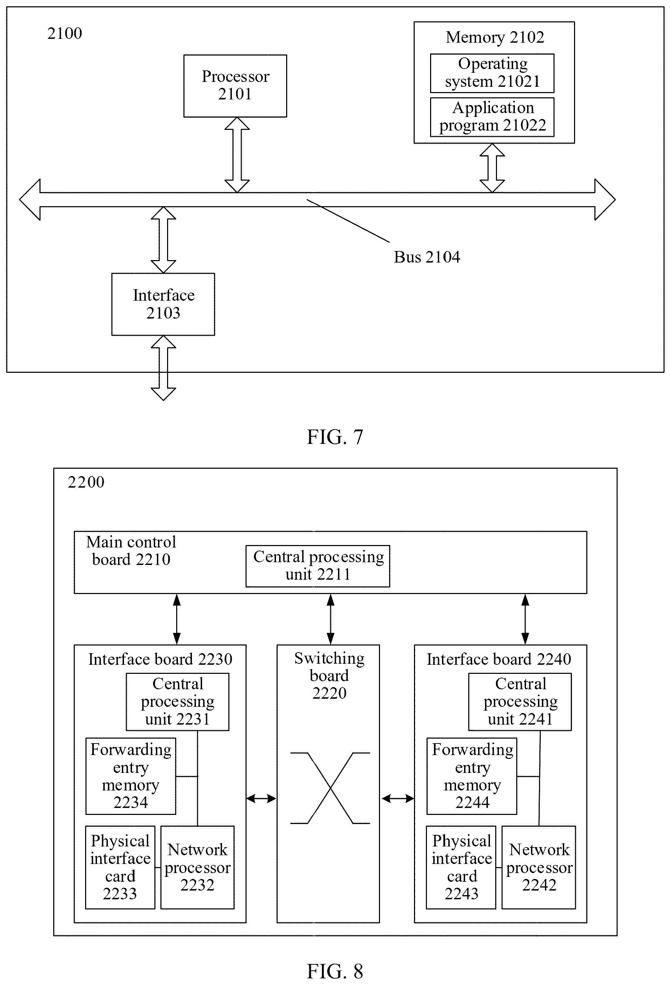

FIG. 7 is a schematic diagram of a hardware structure of a second network device 2100 according to an embodiment of this application. The second network device 2100 shown in FIG. 7 may perform the corresponding steps performed by the second network device in the method in the foregoing embodiments.

As shown in FIG. 7, the second network device 2100 includes a processor 2101, a memory 2102, an interface 2103, and a bus 2104. The interface 2103 may be implemented in a wireless or wired manner. The processor 2101, the memory 2102, and the interface 2103 are connected by using the bus 2104.

The interface 2103 may specifically include a transmitter and a receiver, and is configured to send and receive information between the second network device and the first network device that is in the foregoing embodiments. Alternatively, the interface 2103 is configured to send and receive information or data between the second network device and the third network device that is in the foregoing embodiment. For example, the interface 2103 is configured to support receiving of a control message sent by the first network device, or is configured to support receiving of a data packet sent by the third network device. In an example, the interface 2103 is configured to support processes S103 and S105 in FIG. 2. The processor 2101 is configured to perform processing performed by the second network device in the foregoing embodiments. For example, the processor 2101 is configured to: obtain a traffic steering match item and a traffic steering action item that are in the control message, and steer, based on the traffic steering action item, the data packet that matches the traffic steering match item to a network slice, and/or is used in other processes of the technology described in this specification. In an example, the processor 2101 is configured to support a process S105 in FIG. 2. The memory 2102 includes an action system 21021 and an application program 21022, and is configured to store a program, code, or instructions. When executing the program, the code, or the instructions, the processor or a hardware device may complete processing processes related to the second network device in the method embodiments. Optionally, the memory 2102 may include a read-only memory (Read-only Memory, ROM) and a random access memory (Random Access Memory, RAM). The ROM includes a basic input/output system (Basic Input/Output System, BIOS) or an embedded system, and the RAM includes an application program and an action system. When the second network device 2100 needs to run, a bootloader booting system in the BIOS or the embedded system that is firmed in the ROM is used to boot a system to start, and boot the second network device 2100 to enter a normal running state. After entering the normal running state, the second network device 2100 runs the application program and the action system in the RAM, to complete the processing processes related to the second network device in the method embodiments.

It may be understood that FIG. 7 shows merely a simplified design of the second network device 2100. The second network device may include any quantity of interfaces, processors, or memories during actual application.

FIG. 8 is a schematic diagram of a hardware structure of another second network device 2200 according to an embodiment of this application. The second network device 2200 shown in FIG. 8 may perform the corresponding steps performed by the second network device in the method in the foregoing embodiments.

As shown in FIG. 8, the second network device 2200 includes a main control board 2210, an interface board 2230, a switching board 2220, and an interface board 2240. The main control board 2210, the interface boards 2230 and 2240, and the switching board 2220 are connected to a system backboard by using a system bus for interworking. The main control board 2210 is configured to complete functions such as system management, device maintenance, and protocol processing. The switching board 2220 is configured to exchange data between interface boards (where the interface board is also referred to as a line card or a service board). The interface boards 2230 and 2240 are configured to: provide various service interfaces (such as a POS interface, a GE interface, and an ATM interface), and forward a data packet. In a possible implementation, the second network device 2200 is a forwarding device.

The interface board 2230 may include a central processing unit 2231, a forwarding entry memory 2234, a physical interface card 2233, and a network processor 2232. The central processing unit 2231 is configured to control and manage the interface board, and communicate with a central processing unit 2211 on the main control board 2210. The forwarding entry memory 2234 is configured to store a forwarding entry. The physical interface card 2233 is configured to receive and send traffic. The network memory 2232 is configured to control, based on the forwarding entry, the physical interface card 2233 to receive and send the traffic.

Specifically, the physical interface card 2233 is configured to receive a control message sent by a first network device. The physical interface card 2233 is further configured to forward the data packet.

After receiving the control message, the physical interface card 2233 sends the control message to the central processing unit 2231. The central processing unit 2231 determines, based on information in a packet header of the control message, that the control message needs to be processed by the central processing unit 2231. Correspondingly, the central processing unit 2231 processes the control message.

Optionally, after receiving the control message, the physical interface card 2233 sends the control message to the central processing unit 2231. The central processing unit 2231 determines, based on the information in the packet header of the control message, that the control message needs to be processed by the central processing unit 2211. The central processing unit 2231 sends the control message to the central processing unit 2211. The central processing unit 2211 processes the control message.

The central processing unit 2231 is further configured to control the network processor 2232 to obtain the forwarding entry in the forwarding entry memory 2234. In addition, the central processing unit 2231 is further configured to control the network processor 2232 to receive and send the traffic via the physical interface card 2233.

It should be understood that actions on the interface board 2240 are consistent with the actions on the interface board 2230 in this embodiment of the present invention. For brevity, details are not described. It should be understood that the second network device 2200 in this embodiment may correspond to the functions and/or the various implemented steps in the foregoing method embodiments. Details are not described herein.

In addition, it should be noted that, there may be one or more main control boards. When there are a plurality of main control boards, the main control boards may include an active main control board and a standby main control board. There may be one or more interface boards. A second network device having a stronger data processing capability provides more interface boards. There may also be one or more physical interface cards on the interface board. There may be no switching board or one or more switching boards. When there are a plurality of switching boards, load balancing and redundancy backup may be implemented together. In a centralized forwarding architecture, the second network device may not need the switching board, and the interface board undertakes a service data processing function of an entire system. In a distributed forwarding architecture, the second network device may have at least one switching board. Data between a plurality of interface boards is exchanged by using the switching board, to provide a large-capacity data exchange and processing capability. Therefore, a data access and processing capability of the second network device in the distributed architecture is greater than that of the device in the centralized architecture. A specific architecture to be used depends on a specific networking deployment scenario, and is not limited herein.

In addition, an embodiment of this application provides a computer storage medium configured to store computer software instructions used by the foregoing second network device. The computer software instructions include a program designed for performing the foregoing method embodiments.

An embodiment of this application further includes a network system. The network system includes a first network device and a second network device. The first network device is the first network device in FIG. 3, FIG. 4, or FIG. 5, and the second network device is the second network device in FIG. 6, FIG. 7, or FIG. 8.

Method or algorithm steps described in combination with the content disclosed in this application may be implemented by hardware, or may be implemented by a processor by executing software instructions. The software instructions may be formed by a corresponding software module. The software module may be stored in a RAM memory, a flash memory, a ROM memory, an EPROM memory, an EEPROM memory, a register, a hard disk, a removable hard disk, a CD-ROM memory, or a storage medium in any other form well-known in the art. For example, a storage medium is coupled to a processor, so that the processor can read information from the storage medium and write information into the storage medium. It is clear that the storage medium may be a component of the processor. The processor and the storage medium may be disposed in an ASIC. In addition, the ASIC may be located in user equipment. It is clear that the processor and the storage medium may exist in the user equipment as discrete components.

A person skilled in the art should be aware that in the foregoing one or more examples, functions described in this application may be implemented by hardware or a combination of hardware and software. When the functions are implemented by the combination of hardware and software, the software may be stored in a computer-readable medium or transmitted as one or more instructions or code in the computer-readable medium. The computer-readable medium includes a computer storage medium and a communication medium, where the communication medium includes any medium that enables a computer program to be transmitted from one place to another. The storage medium may be any available medium accessible to a general-purpose or a special-purpose computer.

## Claims

1. A traffic steering method, comprising:
generating (S101), by a first network device, a control message, wherein the control message comprises a traffic steering match item and a traffic steering action item, the traffic steering action item comprises slice information, and the slice information indicates a network slice, the slice information comprises a segment list, the segment list is a segment identifier list associated with the network slice; and
sending (S102), by the first network device, the control message to a second network device, wherein the control message indicates the second network device to steer, based on the traffic steering action item, a data packet that matches the traffic steering match item to the network slice.

2. The method according to claim 1, wherein the slice information further comprises a slice identifier.

3. The method according to claims 1 or 2, wherein the traffic steering match item is used to perform matching on information in the data packet.

4. The method according to any one of claims 1 to 3, wherein the control message is a border gateway protocol, BGP, update message, the BGP update message comprises BGP routing information, and the BGP routing information carries the traffic steering match item and the traffic steering action item.

5. The method according to claim 4, wherein the BGP routing information is border gateway protocol flow specification, BGP flowspec, information.

6. The method according to claim 5, wherein the BGP flowspec information comprises a route attribute and network layer reachability information, NLRI, and the traffic steering action item is carried in the route attribute, or the traffic steering action item is carried in the NLRI.

7. The method according to any one of claims 1 to 6, wherein the traffic steering action item further comprises a traffic steering action type, and the traffic steering action type indicates that a traffic steering action is to steer traffic to the network slice.

8. The method according to claim 6, wherein the traffic steering match item is carried in the NLRI.

9. The method according to any one of claims 1 to 3, wherein the control message is a network configuration protocol, NETCONF, message, the NETCONF message comprises event-condition-action, ECA, information, an action in the ECA information carries the traffic steering action item, and a condition in the ECA information carries the traffic steering match item.

10. The method according to any one of claims 1 to 9, wherein the traffic steering match item comprises at least one of the following information:
a source internet protocol, IP, address, a destination IP address, a source port number, a destination port number, a protocol number, a flow label, and a priority.

11. A traffic steering method, comprising:
receiving (S103), by a second network device, a control message sent by a first network device, wherein the control message comprises a traffic steering match item and a traffic steering action item, and wherein the traffic steering action item comprises slice information, and the slice information indicates a network slice, the slice information comprises a segment list, the segment list is a segment identifier list associated with the network slice;
receiving (S 104), by the second network device, a data packet; and
steering (S105), by the second network device based on the traffic steering action item, data packet that matches the traffic steering match item to a network slice.

12. The method according to claim 11, wherein the slice information further comprises a slice identifier.

13. The method according to any one of claims 11 to 12, wherein the traffic steering match item is used to perform matching on information in the data packet.

14. The method according to any one of claims 11 to 13, wherein the control message is a border gateway protocol, BGP, update message, the BGP update message comprises BGP routing information, and the BGP routing information carries the traffic steering match item and the traffic steering action item.

15. The method according to claim 14, wherein the BGP routing information is border gateway protocol flow specification, BGP flowspec, information.

16. A first network device, comprising a processor and a memory, wherein the processor is coupled to the memory;
the memory is configured to store a program; and
the processor is configured to execute the program in the memory, so that the first network device performs the method according to any one of claims 1 to 10.

17. A second network device, comprising a processor and a memory, wherein the processor is coupled to the memory;
the memory is configured to store a program; and
the processor is configured to execute the program in the memory, so that the second network device performs the method according to any one of claims 11 to 15.

18. A communication network system, wherein the communication network system comprises a first network device and a second network device, the first network device performs the method according to any one of claims 1 to 10, and the second network device performs the method according to any one of claims 11 to 15.

## Patentansprüche

1. Verkehrslenkungsverfahren, welches Folgendes umfasst:
Generieren (S101) einer Steuernachricht durch eine erste Netzwerkvorrichtung, wobei die Steuernachricht ein Verkehrslenkungsabgleichelement und ein Verkehrslenkungsaktionselement umfasst, wobei das Verkehrslenkungsaktionselement Slice-Informationen umfasst, und die Slice-Informationen eine Netzwerk-Slice angeben, wobei die Slice-Informationen eine Segmentliste umfassen, wobei die Segmentliste eine Segmentidentifikatorliste ist, die mit der Netzwerk-Slice assoziiert ist; und
Senden (S102) der Steuernachricht durch die erste Netzwerkvorrichtung an eine zweite Netzwerkvorrichtung, wobei die Steuernachricht der zweiten Netzwerkvorrichtung angibt, basierend auf dem Verkehrslenkungsaktionselement, ein Datenpaket, welches mit dem Verkehrslenkungsabgleichelement übereinstimmt, an die Netzwerk-Slice zu lenken.

2. Verfahren gemäß Anspruch 1, wobei die Slice-Informationen des Weiteren einen Slice-Identifikator umfassen.

3. Verfahren gemäß den Ansprüchen 1 oder 2, wobei das Verkehrslenkungsabgleichelement verwendet wird, um Abgleichen mit Informationen in dem Datenpaket durchzuführen.

4. Verfahren gemäß einem der Ansprüche 1 bis 3, wobei die Steuernachricht eine "Border Gateway Protocol"-, BGP-, Aktualisierungsnachricht ist, wobei die BGP-Aktualisierungsnachricht BGP-Routinginformationen umfasst und die BGP-Routinginformationen das Verkehrslenkungsabgleichelement und das Verkehrslenkungsaktionselement führen.

5. Verfahren gemäß Anspruch 4, wobei die BGP-Routinginformationen "Border Gateway Protocol"-Flussspezifikations-, BGP-Flowspec-, Informationen sind.

6. Verfahren gemäß Anspruch 5, wobei die BGP-Flowspec-Informationen ein Routenattribut und Netzwerkschichterreichbarkeitsinformationen, NLRI, umfassen, und das Verkehrslenkungsaktionselement in dem Routenattribut geführt wird, oder das Verkehrslenkungsaktionselement in den NLRI geführt wird.

7. Verfahren gemäß einem der Ansprüche 1 bis 6, wobei das Verkehrslenkungsaktionselement des Weiteren einen Verkehrslenkungsaktionstyp umfasst, und wobei der Verkehrslenkungsaktionstyp angibt, dass eine Verkehrslenkungsaktion Lenken von Verkehr zu der Netzwerk-Slice ist.

8. Verfahren gemäß Anspruch 6, wobei das Verkehrslenkungsabgleichelement in den NLRI geführt wird.

9. Verfahren gemäß einem der Ansprüche 1 bis 3, wobei die Steuernachricht eine Netzwerkkonfigurationsprotokoll-, NETCONF-, Nachricht ist, wobei die NETCONF-Nachricht Ereignis-Bedingung-Aktion-, ECA-, Informationen umfasst, eine Aktion in den ECA-Informationen das Verkehrslenkungsaktionselement führt, und eine Bedingung in den EVA-Informationen das Verkehrslenkungsabgleichelement führt.

10. Verfahren gemäß einem der Ansprüche 1 bis 9, wobei das Verkehrslenkungsabgleichelement mindestens eine der folgenden Informationen umfasst:
eine Quell-Internetprotokoll-, IP-, Adresse, eine Ziel-IP-Adresse, eine Quell-Portnummer, eine Ziel-Portnummer, eine Protokollnummer, ein "Flow Label" und eine Priorität.

11. Verkehrslenkungsverfahren, welches Folgendes umfasst:
Empfangen (S103) einer Steuernachricht, die von einer ersten Netzwerkvorrichtung gesendet wurde, durch eine zweite Netzwerkvorrichtung, wobei die Steuernachricht ein Verkehrslenkungsabgleichelement und ein Verkehrslenkungsaktionselement umfasst, und wobei das Verkehrslenkungsaktionselement Slice-Informationen umfasst,
und die Slice-Informationen eine Netzwerk-Slice angeben, wobei die Slice-Informationen eine Segmentliste umfassen, wobei die Segmentliste eine Segmentidentifikatorliste ist, die mit der Netzwerk-Slice assoziiert ist;
Empfangen (S104) eines Datenpakets durch die zweite Netzwerkvorrichtung; und
Lenken (S105) des Datenpakets, das mit dem Verkehrslenkungsabgleichelement übereinstimmt, an eine Netzwerk-Slice durch die zweite Netzwerkvorrichtung basierend auf dem Verkehrslenkungsaktionselement.

12. Verfahren nach Anspruch 11, wobei die Slice-Informationen des Weiteren einen Slice-Identifikator umfassen.

13. Verfahren gemäß einem der Ansprüche 11 bis 12, wobei das Verkehrslenkungsabgleichelement verwendet wird, um Abgleichen mit Informationen in dem Datenpaket durchzuführen.

14. Verfahren gemäß einem der Ansprüche 11 bis 13, wobei die Steuernachricht eine "Border Gateway Protocol"-, BGP-, Aktualisierungsnachricht ist, wobei die BGP-Aktualisierungsnachricht BGP-Routinginformationen umfasst und die BGP-Routinginformationen das Verkehrslenkungsabgleichelement und das Verkehrslenkungsaktionselement führen.

15. Verfahren gemäß Anspruch 14, wobei die BGP-Routinginformationen "Border Gateway Protocol"-Flussspezifikations-, BGP-Flowspec-, Informationen sind.

16. Erste Netzwerkvorrichtung, die einen Prozessor und einen Speicher umfasst, wobei der Prozessor an den Speicher gekoppelt ist;
der Speicher konfiguriert ist, ein Programm zu speichern; und
der Prozessor konfiguriert ist, das Programm in dem Speicher auszuführen, so dass die erste Netzwerkvorrichtung das Verfahren gemäß einem der Ansprüche 1 bis 10 durchführt.

17. Zweite Netzwerkvorrichtung, die einen Prozessor und einen Speicher umfasst, wobei der Prozessor an den Speicher gekoppelt ist;
der Speicher konfiguriert ist, ein Programm zu speichern; und
der Prozessor konfiguriert ist, das Programm in dem Speicher auszuführen, so dass die zweite Netzwerkvorrichtung das Verfahren gemäß einem der Ansprüche 11 bis 15 durchführt.

18. Kommunikationsnetzwerksystem, wobei das Kommunikationsnetzwerksystem eine erste Netzwerkvorrichtung und eine zweite Netzwerkvorrichtung umfasst, wobei die erste Netzwerkvorrichtung das Verfahren gemäß einem der Ansprüche 1 bis 10 durchführt, und die zweite Netzwerkvorrichtung das Verfahren gemäß einem der Ansprüche 11 bis 15 durchführt.

## Revendications

1. Procédé d'orientation de trafic, comprenant :
la génération (S101), par un premier dispositif de réseau, d'un message de commande, dans lequel le message de commande comprend un élément de correspondance d'orientation de trafic et un élément d'action d'orientation de trafic, l'élément d'action d'orientation de trafic comprend des informations de tranche, et les informations de tranche indiquent une tranche de réseau, les informations de tranche comprennent une liste de segments, la liste de segments est une liste d'identifiants de segments associée à la tranche de réseau ; et
l'envoi (S102), par le premier dispositif de réseau, du message de commande à un second dispositif de réseau, dans lequel le message de commande indique au second dispositif de réseau d'orienter, sur la base de l'élément d'action d'orientation de trafic, un paquet de données correspondant à l'élément de correspondance d'orientation de trafic vers la tranche de réseau.

2. Procédé selon la revendication 1, dans lequel les informations de tranche comprennent en outre un identifiant de tranche.

3. Procédé selon la revendication 1 ou 2, dans lequel l'élément de correspondance d'orientation de trafic est utilisé pour effectuer une correspondance sur des informations dans le paquet de données.

4. Procédé selon l'une quelconque des revendications 1 à 3, dans lequel le message de commande est un message de mise à jour du protocole de passerelle frontière, BGP, le message de mise à jour du BGP comprend des informations de routage de BGP, et les informations de routage de BGP transportent l'élément de correspondance d'orientation de trafic et l'élément d'action d'orientation de trafic.

5. Procédé selon la revendication 4, dans lequel les informations de routage de BGP sont des informations de spécification de flux du protocole de passerelle frontière, BGP flowspec.

6. Procédé selon la revendication 5, dans lequel les informations du BGP flowspec comprennent un attribut de route et des informations de joignabilité de couche réseau, NLRI, et l'élément d'action d'orientation de trafic est transporté dans l'attribut de route, ou l'élément d'action d'orientation de trafic est transporté dans les NLRI.

7. Procédé selon l'une quelconque des revendications 1 à 6, dans lequel l'élément d'action d'orientation de trafic comprend en outre un type d'action d'orientation de trafic, et le type d'action d'orientation de trafic indique qu'une action d'orientation de trafic est d'orienter le trafic vers la tranche de réseau.

8. Procédé selon la revendication 6, dans lequel l'élément de correspondance d'orientation de trafic est transporté dans les NLRI.

9. Procédé selon l'une quelconque des revendications 1 à 3, dans lequel le message de commande est un message du protocole de configuration de réseau, NETCONF, le message NETCONF comprend des informations d'événement/condition/action, ECA, une action dans les informations ECA transporte l'élément d'action d'orientation de trafic, et une condition dans les informations ECA transporte l'élément de correspondance d'orientation de trafic.

10. Procédé selon l'une quelconque des revendications 1 à 9, dans lequel l'élément de correspondance d'orientation de trafic comprend au moins l'une des informations suivantes :
une adresse de protocole Internet, IP, source, une adresse IP de destination, un numéro de port source, un numéro de port destination, un numéro de protocole, une étiquette de flux, et une priorité.

11. Procédé d'orientation de trafic, comprenant :
la réception (S103), par un second dispositif de réseau, d'un message de commande envoyé par un premier dispositif de réseau, dans lequel le message de commande comprend un élément de correspondance d'orientation de trafic et un élément d'action d'orientation de trafic, et dans lequel l'élément d'action d'orientation de trafic comprend des informations de tranche, et les informations de tranche indiquent une tranche de réseau, les informations de tranche comprennent une liste de segments, la liste de segments est une liste d'identifiants de segments associée à la tranche de réseau ;
la réception (S104), par le second dispositif de réseau, d'un paquet de données ; et
l'orientation (S105), par le second dispositif de réseau en fonction de l'élément d'action d'orientation de trafic, d'un paquet de données correspondant à l'élément de correspondance d'orientation de trafic vers une tranche de réseau.

12. Procédé selon la revendication 11, dans lequel les informations de tranche comprennent en outre un identifiant de tranche.

13. Procédé selon l'une quelconque des revendications 11 à 12, dans lequel l'élément de correspondance d'orientation de trafic est utilisé pour effectuer une correspondance sur des informations dans le paquet de données.

14. Procédé selon l'une quelconque des revendications 11 à 13, dans lequel le message de commande est un message de mise à jour du protocole de passerelle frontière, BGP, le message de mise à jour du BGP comprend des informations de routage du BGP, et les informations de routage du BGP transportent l'élément de correspondance d'orientation de trafic et l'élément d'action d'orientation de trafic.

15. Procédé selon la revendication 14, dans lequel les informations de routage du BGP sont des informations de spécification de flux du protocole de passerelle frontière, BGP flowspec.

16. Premier dispositif de réseau, comprenant un processeur et une mémoire, dans lequel le processeur est couplé à la mémoire ;
la mémoire est configurée pour stocker un programme ; et
le processeur est configuré pour exécuter le programme dans la mémoire, de sorte que le premier dispositif de réseau réalise le procédé selon l'une quelconque des revendications 1 à 10.

17. Second dispositif de réseau, comprenant un processeur et une mémoire, dans lequel le processeur est couplé à la mémoire ;
la mémoire est configurée pour stocker un programme ; et
le processeur est configuré pour exécuter le programme dans la mémoire, de sorte que le second dispositif de réseau réalise le procédé selon l'une quelconque des revendications 11 à 15.

18. Système de réseau de communication, dans lequel le système de réseau de communication comprend un premier dispositif de réseau et un second dispositif de réseau, le premier dispositif de réseau réalise le procédé selon l'une quelconque des revendications 1 à 10, et le second dispositif de réseau réalise le procédé selon l'une quelconque des revendications 11 à 15.
